Europäisches Patentamt

European Patent Office

Office européen des brevets

(11) Veröffentlichungsnummer: **0 023 543**
**A2**

(12) **EUROPÄISCHE PATENTANMELDUNG**

(21) Anmeldenummer: 80102954.7

(22) Anmeldetag: 28.05.80

(51) Int. Cl.³: **H 01 G 1/11**

(30) Priorität: 01.08.79 DE 2931186

(43) Veröffentlichungstag der Anmeldung: 11.02.81
Patentblatt 81/6

(84) Benannte Vertragsstaaten: **AT BE CH FR GB IT LI NL SE**

(71) Anmelder: **Licentia Patent-Verwaltungs-GmbH,
Theodor-Stern-Kai 1, D-6000 Frankfurt/Main 70 (DE)**

(72) Erfinder: **Epple, Richard, Dr., Dipl.-Phys, Im
Eselsberg 28, D-7103 Schwaigern (DE)**
Erfinder: **Selff, Werner, Düsseldorfer Strasse 50,
D-1000 Berlin 15 (DE)**

(74) Vertreter: **Langer, Karl-Heinz, Dipl.-Ing. et al, Licentia
Patent-Verwaltungs-GmbH Theodor-Stern-Kai 1,
D-6000 Frankfurt/Main 70 (DE)**

(54) **Explosionssicherer elektrischer Kondensator mit Abschaltsicherung.**

(57) Explosionssicherer elektrischer Kondensator mit Abschaltsicherung, die bei Erreichen des höchstzulässigen Innendruckes infolge einer Gasentwicklung durch eine Volumenänderung des Gehäuses des Kondensators betätigt wird. Über dem Kondensatorwickel ist eine zur Wickelstirnfläche hin mechanisch vorgespannte, gekrümmte Membrane befestigt, die gleichzeitig als das Gehäuse abdichtender Deckel verwendet werden kann oder die zwischen einem dichten Deckel und der Wickelstirnfläche angeordnet ist. An dieser Membran ist ein straff gespannter Abreißdraht befestigt, der beim plötzlichen Übergang der Membran in die zweite stabile Lage an einer Sollbruchstelle abreißt.

- 1 -

EXPLOSIONSSICHERER ELEKTRISCHER
KONDENSATOR MIT ABSCHALTSICHERUNG.

Die Erfindung betrifft einen explosionssicheren elektrischen Kondensator mit Abschaltsicherung gemäß dem Oberbegriff des Anspruches 1.

Ein derartiger Kondensator ist aus der DE-PS 1 289 584 bekannt. Dort und bei dem aus der DE-AS 2 342 356 bekannten
Kondensator wird die Abschaltsicherung bei Erreichen des
höchstzulässigen Innendruckes infolge einer Gasentwicklung durch eine Formänderung des Kondensatorgehäuses mittels Dehnung von Sicken betätigt. Zur Dehnung dieser Sicken
sind jedoch relativ große Kräfte, d.h. Innendrucke im Kondensator, erforderlich.

Aus der DE-AS 1 044 947 ist eine kombinierte Sicherung für
elektrische Kondensatoren bekannt, die aus einer mit einer Membran ausgestatteten Druckdose besteht, und die außer als Überdrucksicherung gleichzeitig auch als Thermosicherung funktioniert. Dort ist die Membran durch eine
Blatt- oder Spiralfeder mechanisch vorgespannt und in sich
elastisch ausgebildet, so daß sich keine zwei stabilen
Schaltlagen ergeben.

Eine andere Sicherung für einen Kondensator ist aus der DE-PS 1 295 071 bekannt. Dort ist der Gehäusedeckel membranartig ausgebildet. Er besitzt einen in das Gehäuseinnere ragenden Fortsatz, der in einem eng passenden scharfkantigen Durchbruch einen Sicherungsdraht abscheren kann. Diese bekannte Ausführungsform einer Membran besitzt jedoch ebenfalls keine zwei mechanisch stabilen Lagen sondern sie ist in allen Lagen gleichmäßig elastisch nachgiebig, so daß die jeweilige Lage von anstehenden Innendruck abhängig ist.

Aus der DE-AS 1 019 753 ist ein Abschalter für elektrische Kondensatoren bekannt, bei dem der Deckel des Kondensators an seinem Rand eine Ringnut besitzt, die breiter ist als der Schaltweg des in das Gehäuse eingebauten Schalters und in welche das Gehäuse so eingesickt ist, daß sich der Deckel mindestens um den Schaltweg des Schalters nach außen verschieben kann, ohne daß das Gehäuse undicht wird. Auch bei dieser bekannten Ausführungsform hängt die Schalterstellung also vom jeweils herrschenden Druck ab.

Der Schalter besitzt also nicht nur zwei genau definierte Schalterstellungen.

Aus der DE-PS 755 115 ist ein Elektrolytkondensator insbesondere der nassen Bauart, bekannt, bei dem zwischen dem Deckel und der Stirnfläche des Kondensatorwickels eine Gummimembran eingespannt ist, welche Löcher besitzt, die sich unter dem Druck der entwickelten Gase öffnen und den Überdruck abbauen.

Während bei allen vorherbeschriebenen Kondensatorbauformen ein z. B. mit einer Sollbruchstelle versehener, straff gespannter Abreißdraht zwischen einem festen Punkt und einem bei Überdruck nachgiebigen Punkt auseinanderreißt, und damit den Kondensator abschaltet, wird bei der zuletzt genannten Sicherung nur der Überdruck abgebaut.

Ein Kondensator mit Abreißsicherung, die zwischen dem Boden und dem Deckel des Kondensatorgehäuses eingespannt ist, ist auch aus der DE-PS 975 024 bekannt. Dort wirkt der bei Überlastung des Kondensators entstehende Innendruck sowohl auf den ausbauchbaren Deckel als auch auf den Boden. Eine bistabile Lage eines dieser beiden Gehäuseteile ist dort nicht beschrieben.

Eine Überdrucksicherung für einen elektrischen Kondensator, aus einer mit einem Abschalter vereinigten Druckdose, deren Ansprechen bei einem unzulässigen Überdruck im Gehäuse einen elektrischen Leiter unterbricht, ist aus der DE-AS 2 601 426 bekannt. Auch dort besitzt die Druckdose eine elastische Membran, die nicht nur zwei stabile Lagen einnimmt, sondern deren Auslenkung vom anstehenden Innendruck abhängt.

Ein elektrischer Kondensator mit einer auf Überdruck ansprechenden Abschaltvorrichtung ist auch aus der DE-AS 2 350 271 bekannt. Diese Sicherung ist an der Außenmantelfläche des Kondensatorwickels angeordnet und besteht aus einem Abreißleiter, der auf der bei unzulässiger Belastung des Kondensators sich auswölbenden Oberfläche unterbrochen wird.

Auf der Außenmantelfläche eines Kondensatorwickels angeordnete Abschaltvorrichtungen sind auch aus der DE-OS 2 636 544, DE-OS 2 638 611 und DE-AS 2 650 468 der Anmelderin bekannt. Dabei sind an der Außenmantelfläche des Kondensatorwickels zwei durch eine schmelzende oder

0023543

plastisch verformbare Isolierschicht getrennte Metallschichten angeordnet, die bei Überlastung des Kondensators einen Kurzschluß bilden und eine Sicherung zum Ansprechen bringen.

Aus der DE-AS 2 606 176 ist ein elektrischer Wickelkondensator mit Abschaltsicherung bekannt, bei dem bei unzulässiger Erwärmung des Kondensatorwickels eine Schrumpfung der Dielektrikumsfolie dazu ausgenutzt wird, beispielsweise eine gewölbte Membran im zentralen Wickelhohlraum, an welcher Schneiden befestigt sind, zusammenzudrücken und dabei einen Stromleiter auseinanderzuschneiden. Dort ist die aus zwei Membranen bestehende Druckdose im zentralen Wickelhohlraum angeordnet, so daß die mögliche Auslenkung der Membran durch die Abmessung des Hohlraumes festgelegt ist. Dadurch, daß die Membranhälften am zentralen Wickelhohlraum anliegen, ist auch die mögliche Druckeinwirkung auf die Membranen nicht optimal.

Der Erfindung liegt die Aufgabe zugrunde, einen elektrischen Kondensator mit Abschaltsicherung zur Verfügung zu stellen, der einfach aufgebaut ist und dessen Sicherung bei einem genau definierten Überdruck im Inneren des Kondensators sicher anspricht und den überlasteten Kondensator abschaltet.

Diese Aufgabe wird erfindungsgemäß durch die kennzeichnenden Merkmale des Anspruches 1 gelöst. Bevorzugte Weiterbildungen der Erfindung sind in den Unteransprüchen beschrieben.

Die mit der Erfindung erzielten Vorteile bestehen insbesondere darin, daß der Kondensator einfach aufgebaut ist und daß die die Sicherung auslösende Membran nur genau zwei stabile Schaltzustände kennt, d.h. bis zu einem genau definierten Überdruck bleibt die Membran in ihrer normalen Betriebsstellung, während sie bei Überschreiten des höchstzulässigen Innendruckes schlagartig in die andere stabile Lage übergeht, wobei die mechanische Energie zum Umschalten vom Betriebszustand zum Abschaltzustand im wesentlichen aus der mechanischen Vorspannung der Membran gewonnen wird, so daß zur Überwindung der zweiten Weghälfte (Übergang vom konvexen zum konkaven Zustand) ein Gasdruck nicht mehr erforderlich ist.

Ausführungsbeispiele der Erfindung sind in der Zeichnung dargestellt. Es zeigen

Fig. 1    einen Wickelkondensator in einem Metallgehäuse,

Fig. 2    einen nassen Wickelkondensator in einem Kunststoffgehäuse und

Fig. 3    einen ölimprägnierten Wickelkondensator in einem Kunststoffgehäuse.

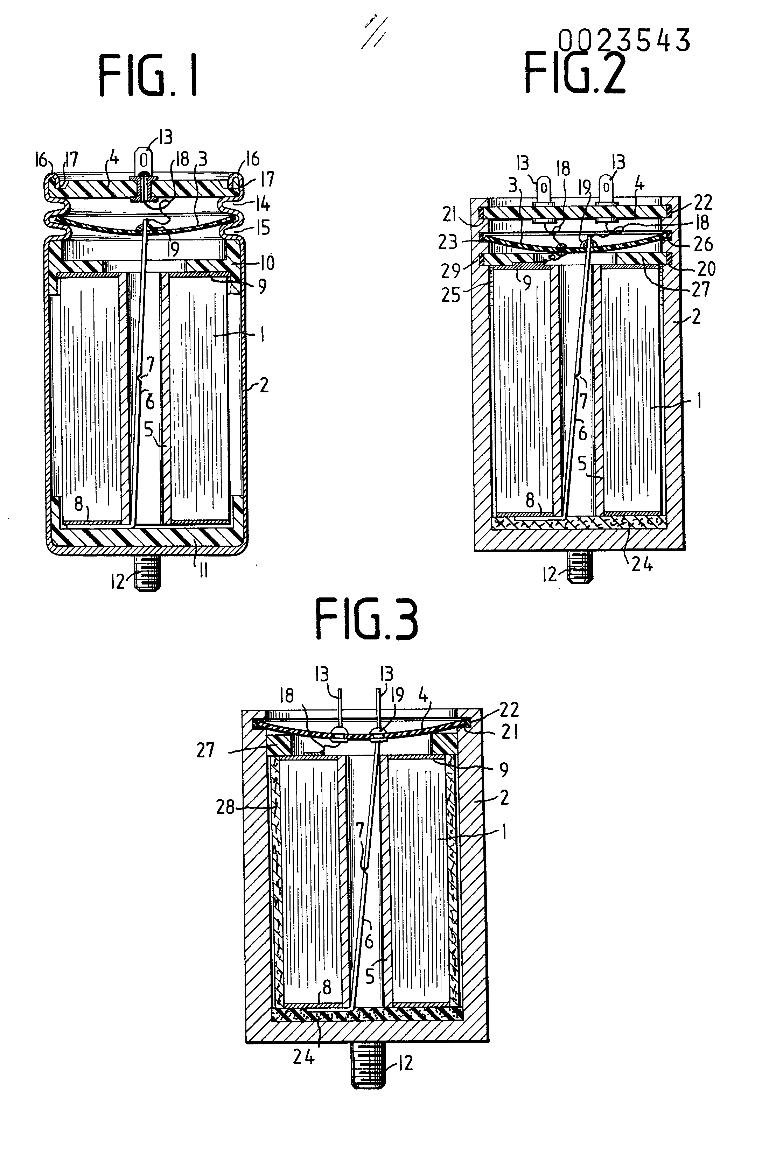

Fig. 1 zeigt einen Kondensatorwickel 1, der an seinen beiden Stirnflächen mit Metallschichten 8 und 9 bedeckt ist, welche die Kondensatorbeläge bilden. Der Kondensatorwickel 1 ist in einem becherförmigen Gehäuse 2 angeordnet. Eine Isolierstoffkappe 11 am Boden des Gehäuses 2 und eine Isolierstoffkappe 10 isolieren den Wickel 1 gegen das Gehäuse 2. Der Kondensatorwickel 1, an dessen Belag 8 ein mit einer Sollbruchstelle 7 ausgestatteter Abreißdraht 6 befestigt ist, der durch den Wickeldorn 5 hindurchragt, ist im Gehäuse 2 durch die umlaufende Sicke 15 an der Mantelfläche des Gehäuses 2 lokalisiert. Diese Sicke 15 und die darüber angeordnete Sicke 14 lokalisieren die in die eine mögliche mechanisch stabile Lage ausgelenkte und gegen das Gehäuse 2 elektrisch isolierte Membran 3, an welcher im Lötpunkt 19 der Abreißdraht 6 z.B. mit einem Lot mit genau definiertem Schmelzpunkt (Thermosicherung) straff gespannt befestigt ist. Auf der Sicke 14 liegt der Gehäusedeckel 4 auf, der eine Umfangsrille 17 besitzt, in welche das stirnseitige Ende 16 des Gehäuses 2 eingebördelt ist. An der dem Deckel zugewandten Seite der Membran 3 ist zwischen dieser und der im Deckel befindlichen Kontaktfahne 13 ein Verbindungsdraht 18 elektrisch leitend angeschlossen (geschweißt), der den Kontakt zwischen dem Belag 8 und der Kontaktfahne 13 herstellt.

Das Gehäuse 2 kann dabei mit einer Elektrolytflüssigkeit oder mit einem Imprägniermittel gefüllt oder auch trocken sein. Es kann auch mit einem Gießharz ausgegossen sein. Das Gehäuse 2 kann aus Metallblech oder aus einem Kunststoff bestehen. Der dargestellte Gewindebolzen 12 dient zur Montage des Kondensators. Der Anschluß des zweiten Belages 9 ist durch einen elektrisch isolierende, gasdichte Durchführung durch die Membran 3 gegeben, die in dieser Figur nicht dargestellt ist.

Fig. 2 zeigt einen Querschnitt durch einen Kondensator, bei dem der Wickel 1 im Gehäuse 2 auf einer Papierscheibe 24 aufliegt und durch einen Befestigungsring 27 aus Kunststoff lokalisiert ist. An den beiden Belägen 8 und 9 des Wickels 1 ist je ein Draht angelötet. Der Abreißsicherungsdraht 6 besitzt eine Sollbruchstelle 7 und ist durch die Membran 3 straff durchgespannt und gasdicht an ihr festgelötet. Von den beiden gasdichten Durchführungen in der Membran 3 geht je ein Draht weiter zu je einer Anschlußfahne 13 im Gehäusedeckel 4. Der Gehäusedeckel 4, die Membran3 und der Befestigungsring 27 rasten in umlaufenden Rillen 21, 26 und 20 ein, in denen Gummiringe 22, 23 und 29 anliegen. Das Gehäuse 2 ist bis unter die Membran 3 mit einer Imprägnierflüssigkeit 25 gefüllt.

Fig. 3 zeigt einen Wickelkondensator, bei dem der Wickel 1 auf einer Schaumstoffscheibe 24 im Gehäuse 2 aufliegt und durch einen Haltering 27 lokalisiert wird, der zwischen dem Deckel 4 und der Wickelstirnfläche anliegt. Zwischen dem Metallbelag 8 und der einen Anschlußfahne 13 ist ein Abreißsicherungsdraht 6 mit Sollbruchstelle 7 straff gespannt. Zwischen dem Metallbelag 9 und der zweiten Anschlußfahne 13 ist eine flexible Verbindungsleitung angeordnet. Zwischen der Mantelfläche des Wickels 1 und der Wand des Gehäuses 2 befinden sich einige Lagen eines Papierwickels 28 zur Aufnahme einer Imprägnierflüssigkeit. Der bistabile, durchgekrümmte Deckel 4 ist in eine umlaufende Rille 21, die mit einem Gummiring 22 ausgestattet ist, eingerastet. Ein an das Gehäuse 2 angeformter Gewindezapfen 12 dient zur Montage des Kondensators.

0023543

PATENTANSPRÜCHE:

1. Explosionssicherer elektrischer Kondensator mit Abschaltsicherung, die bei Erreichen des höchstzulässigen Innendruckes infolge einer Gasentwicklung durch eine Volumenänderung des Kondensatorgehäuses betätigt wird, bei dem auch nach Betätigung der Sicherung das Gehäuse dicht bleibt,

d a d u r c h  g e k e n n z e i c h n e t ,

daß über dem Kondensatorwickel (1) eine zur Wickelstirnfläche hin mechanisch vorgespannte, gekrümmte, dichte Membran (3) befestigt ist, die ein Funktionelement der Abschaltsicherung bildet, wobei die so gekrümmte Membran (3) die eine von zwei möglichen mechanisch stabilen Lagen einnimmt, welche beim Überschreiten des höchstzulässigen Innendruckes in die zweite stabile Lage übergeht, und dabei eine Abschaltsicherung (6, 7) zum Ansprechen bringt.

2. Kondensator nach Anspruch 1, dadurch gekennzeichnet, daß das durch die beiden möglichen stabilen Lagen der Membran (3) gegebene Volumen mindestens gleich oder größer ist, als das bei Überlastung des Kondensators bis zum Ansprechen sich bildende Gasvolumen.

3. Kondensator nach einem der Ansprüche 1 bis 2, dadurch gekennzeichnet, daß die Membran (3) den Gehäusedeckel (4) des Kondensators bildet, durch welchen die Anschlüsse (13) der Kondensatorbeläge hindurchgeführt sind.

4. Kondensator nach einem der Ansprüche 1 bis 2, dadurch gekennzeichnet, daß die Membran (3) zwischen der Stirnseite des Kondensatorwickels (1) und dem Gehäusedeckel (4) lokalisiert ist.

5. Kondensator nach einem der Ansprüche 1 bis 4, dadurch gekennzeichnet, daß das Gehäuse (2) und die Membran (3) und/oder der Befestigungsring (27) und/oder der Gehäusedeckel (4) aus Kunststoff bestehen.

6. Kondensator nach Anspruch 5, dadurch gekennzeichnet, daß im Gehäuse (2) umlaufende Rillen (20, 21, 23) vorhanden sind, in denen die Membran (3) und/oder der Befestigungsring (27) und/oder der Gehäusedeckel (4) lokalisiert sind.

7. Kondensator nach Anspruch 6, dadurch gekennzeichnet, daß die umlaufenden Rillen (20, 21, 23) durch vorspringende Wülste verstärkt sind.

8. Kondensator nach einem der Ansprüche 5 bis 7, dadurch gekennzeichnet, daß die umlaufenden Rillen (20, 21, 23) mit je einem Gummiring (22, 26, 29) ausgelegt sind.

9. Kondensator nach einem der Ansprüche 1 bis 8, dadurch gekennzeichnet, daß der Kondensatorwickel (1) unmittelbar durch einen zwischen der oberen Wickelstirnfläche und dem gekrümmten Deckel (3) liegenden Befestigungsring (27) im Gehäuse (2) lokalisiert ist.

10. Kondensator nach einem der Ansprüche 1 bis 4, dadurch gekennzeichnet, daß das Gehäuse (2) und die Membran (3) und/oder der Befestigungsring (27) und/oder der Gehäusedeckel (4) aus Metall bestehen.

11. Kondensator nach Anspruch 10, dadurch gekennzeichnet, daß der Kondensatorwickel (1) und die Membran (3) und/oder der Befestigungsring (27) und/oder der Gehäusedeckel (4) durch Sicken (14, 15) im Mantel des Gehäuses (2) lokalisiert sind.

12. Kondensator nach einem der Ansprüche 1 bis 4, dadurch gekennzeichnet, daß die Membran (3) und/oder der Gehäusedeckel (4) und/oder der Befestigungsring (27) aus einem Kunststoff und das Gehäuse (2) aus Metall bestehen.

13. Kondensator nach einem der Ansprüche 1 bis 12, dadurch gekennzeichnet, daß die Membran (3) und/oder der Gehäusedeckel (4) einen konstanten Krümmungsradius besitzt.

14. Kondensator nach einem der Ansprüche 1 bis 12, dadurch gekennzeichnet, daß die Membran (3) und/oder der Gehäusedeckel (4) einen radial veränderlichen Krümmungsradius besitzt.

15. Kondensator nach einem der Ansprüche 1 bis 14, dadurch gekennzeichnet, daß zwischen der Membran (3) oder zwischen dem als Membran wirkenden Gehäusedeckel (4) und der der Membran (3) abgewandten metallisierten Wickelstirnseite (8) ein eine Sollbruchstelle (7) be-

sitzender Abreißsicherungsdraht (6) eingespannt ist.

16. Kondensator nach Anspruch 15, dadurch gekennzeichnet, daß der Abreißsicherungsdraht (6) durch den hohlen Wickeldorn (5) hindurch verläuft.

17. Kondensator nach einem der Ansprüche 1 bis 14, dadurch gekennzeichnet, daß an der Membran (3) oder an dem als Membran dienenden Deckel (4) ein klingenförmiger Ansatz lokalisiert ist, der beim Übergang der Membran (3) bzw. des Deckels (4) aus der normalen stabilen Betriebslage in die Überlastlage einen Sicherungsdraht (6) auseinandertrennt und damit den Kondensator abschaltet.

18. Kondensator nach einem der Ansprüche 1 bis 14, dadurch gekennzeichnet, daß an der Membran (3) oder an dem als Membran dienenden Gehäusedeckel (4) eine Kontaktvorrichtung derart lokalisiert ist, daß beim Übergang der Membran bzw. des als Membran wirkenden Deckels von der normalen stabilen Betriebslage in die stabile Überlastlage ein Stromkreis geschlossen wird, der den überlasteten Kondensator kurzschließt.

19. Kondensator nach Anspruch 18, dadurch gekennzeichnet, daß beim Kurzschluß des Kondensators eine Schmelzsicherung im Kondensator zum Ansprechen gebracht wird.

20. Kondensator nach einem der Ansprüche 1 bis 19, dadurch gekennzeichnet, daß der Kondensator mit einem flüssigen Elektrolyten gefüllt ist.

21. Kondensator nach einem der Ansprüche 1 bis 19, dadurch gekennzeichnet, daß der Kondensator mit einer Imprägnierflüssigkeit (25) gefüllt ist.

22. Kondensator nach einem der Ansprüche 1 bis 19, dadurch gekennzeichnet, daß der Kondensator mit keiner Flüssigkeit gefüllt ist.

23. Kondensator nach einem der Ansprüche 1 bis 19, dadurch gekennzeichnet, daß der Kondensator ganz oder teilweise mit Gießharz ausgegossen ist.

24. Kondensator nach einem der Ansprüche 1 bis 10, dadurch gekennzeichnet, daß der Gehäusedeckel (4) an seinem Umfang gummiert ist.

25. Kondensator nach einem der Ansprüche 1 bis 12, dadurch gekennzeichnet, daß der Gehäusedeckel (4) eine umlaufende Rille (17) besitzt, in welche das stirnseitige Ende (16) des Gehäusemantels (2) eingebördelt ist.

26. Kondensator nach Anspruch 25, dadurch gekennzeichnet, daß die Rille (17) mit einem Dichtungsgummiring ausgekleidet ist.

27. Kondensator nach Anspruch 10, dadurch gekennzeichnet, daß der Gehäusedeckel (4) und das Gehäuse (2) miteinander verschweißt sind.

28. Kondensator nach einem der vorhergenannten Ansprüche, dadurch gekennzeichnet, daß auf den beiden metallisierten Stirnflächen (8, 9) des Wickels (1) je eine flüssigkeitsgetränkte Papierscheibe (24) oder Schaumstoffscheibe (24) lokalisiert ist.

29. Kondensator nach einem der vorhergenannten Ansprüche, dadurch gekennzeichnet, daß zwischen dem Mantel des Wickels (1) und dem Gehäusemantel (2) ein flüssigkeitsgetränkter Papierwickel (28) lokalisiert ist.

30. Kondensator nach einem der Ansprüche 28 bis 29, dadurch gekennzeichnet, daß die Tränkflüssigkeit (25) ein Öl ist.

0023543

# FIG. 1

# FIG.2

# FIG.3